# EUROPEAN PATENT APPLICATION

(11) **EP 2 645 310 A2**
(43) Date of publication of application: **02.10.2013**
(21) Application number: 13001010.1
(22) Date of filing: 27.02.2013
(51) Int. Cl.: G06N 5/04

(54) **Case-based adaptation framework for customization knowledge in enterprise systems**

(30) Priority: 30.03.2012 US 201213436634
(71) Applicant: SAP AG, 69190 Walldorf (DE)
(72) Inventor: Allgaier, Matthias, 69190 Walldorf (DE)
(74) Representative: Müller-Boré & Partner Patentanwälte

(57) **Abstract**

Embodiments relate to systems and methods for a case-based adaptation framework allowing adaptation of an existing customizing solution (from a previous case) to a new, unsolved integration, adaptation, or extension problem. Particular embodiments may rely upon an adaptation approach in which the problem solution of a retrieved case is transformed into a new problem solution of the query case by application of adaptation rules. In certain embodiments, a transformational adaptation method may be embedded into an interactive, semi-automatic customization procedure that provides recommendations on possible adaptation steps to the system integrator.

## Description

### BACKGROUND

Particular embodiments generally relate to enterprise systems.

Despite the advances in Service-Oriented Architectures (SOA), the integration of complementary services into standard enterprise systems requires deep expert knowledge. Typically the integration of services, provided by partners or independent software vendors, is carried out in time- and cost intensive integration projects.

In most cases, extension or adaptation of a core enterprise system itself is required. In order to extend or adapt standard enterprise systems a very high level of business domain knowledge as well as technical expert knowledge are required. Therefore services are typically integrated by highly specialized expert consultants (system or service integrators).

System integrators typically start from scratch while integrating services into standard enterprise systems. Given a new integration problem system integrators implicitly and manually search for similar problems they solved in the past, e.g. by searching in code fragments or documentations of already solved integration solutions. This implies a high degree of manual work and therefore leads to high integration costs.

### SUMMARY

Embodiments relate to systems and methods for a case-based adaptation framework allowing adaptation of an existing customizing solution (from a previous case) to a new, unsolved integration, adaptation, or extension problem. Particular embodiments may rely upon an adaptation approach in which the problem solution of a retrieved case is transformed into a new problem solution of the query case by application of adaptation rules. In certain embodiments, a transformational adaptation method may be embedded into an interactive, semi-automatic customization procedure that provides recommendations on possible adaptation steps to the system integrator.

An embodiment of a method comprises providing a stored customization case previously used to customize a first enterprise system, wherein the stored customization case includes a customization problem and a customization solution. A knowledge base including an adaptation rule is provided. An adaptation engine is caused to receive from a user a query comprising an unsolved customization case to customize a second enterprise system, the unsolved customization case having a new customization problem and not having a customization solution. The adaptation engine is caused to reference the stored customization case and the adaptation rule to generate a target customization case comprising the new customization problem and an adapted customization solution. The adaptation engine is caused to output the target customization case to the user.

An embodiment of a non-transitory computer readable storage medium, embodies a computer program for performing a method, said method comprising providing a stored customization case previously used to customize a first enterprise system, wherein the stored customization case includes a customization problem and a customization solution. The method further comprises providing a knowledge base including an adaptation rule, and causing an adaptation engine to receive from a user a query comprising an unsolved customization case to customize a second enterprise system, the unsolved customization case having a new customization problem and not having a customization solution. The method further comprises causing the adaptation engine to reference the stored customization case and the adaptation rule to generate a target customization case comprising the new customization problem and an adapted customization solution. The method further comprises causing the adaptation engine to output the target customization case to the user.

An embodiment of a computer system comprises one or more computer processors, and a non-transitory computer readable storage medium. The non-transitory computer readable storage medium comprises instructions for controlling the one or more computer processors to be operable to provide a stored customization case previously used to customize a first enterprise system, wherein the stored customization case includes a customization problem and a customization solution. The non-transitory computer readable storage medium comprises instructions for providing a knowledge base including an adaptation rule, and to cause an adaptation engine to receive from a user a query comprising an unsolved customization case to customize a second enterprise system, the unsolved customization case having a new customization problem and not having a customization solution. The non-transitory computer readable storage medium further comprises instructions for causing the adaptation engine to reference the stored customization case and the adaptation rule to generate a target customization case comprising the new customization problem and an adapted customization solution. The non-transitory computer readable storage medium further comprises instructions for causing the adaptation engine to output the target customization case to the user.

In some embodiments generating the target customization case comprises determining a list of recommended plan adaptation steps of a customization process, selecting and adjusting the recommended plan adaptation steps, applying one or more of the recommended plan adaptation steps, and executing the customization process in a context of the target customization case.

According to particular embodiments, determining a list of recommended plan adaptation steps of a customization process is based on differences between customization problem descriptions of the query, and customization problem descriptions of the stored customization case.

In particular embodiments, selecting and adjusting the recommended plan adaptation steps comprises prompting the user to manually accept, reject, or complete parameterization of suggested modifications of the customization process.

According to an embodiment, the list of recommended plan adaptation steps comprises a recommendation to modify, insert, or delete a customization task of the customization process.

In some embodiments, the knowledge base comprises an adaptation pattern referenced by the adaptation engine to generate the target customization case.

The following detailed description and accompanying drawings provide a better understanding of the nature and advantages of certain embodiments.

### BRIEF DESCRIPTION OF THE DRAWINGS

Figure. 1 depicts a system for providing definition and retrieval of integration cases according to one embodiment.

Figure 2 depicts a case-based reasoning cycle for service integration according to one embodiment.

Figure 3 shows a more detailed example of case-based recommender system utilizing adaptation according to an embodiment.

Figure 4 illustrates an embodiment of a computer system.

Figure 5 shows a Meta-Model corresponding to a customization case utilizing adaptation according to a particular embodiment.

Figures 5A-B illustrate use of an adaptation framework according to an embodiment, in a customization case wherein a core process is being adapted for extension.

Figure 6 is a simplified diagram showing the overall architecture of one embodiment of the CAPE Framework, and the case adaptation engine present therein.

Figures 7A-C are screen shots showing adaptation of a customization case of a prototype system according to an embodiment.

Figure 8 is a simplified view showing an overview on an embodiment of the customization case adaptation procedure.

Figure 9 shows an example of an enterprise system according to one embodiment.

Figure 10 shows a simplified process flow of an embodiment of a customization case adaptation procedure.

Figure 10A shows a simplified process flow of a first phase of the embodiment of the case adaptation procedure of Figure 10.

Figures 10B-D show simplified process flows of a second phase of the embodiment of the case adaptation procedure of Figure 10.

Figure 10E shows a simplified process flow of a third phase of the embodiment of the case adaptation procedure of Figure 10.

Figure 10F shows a simplified process flow of a fourth phase of the embodiment of the case adaptation procedure of Figure 10.

Figure 11 is a graphical depiction of possible areas of application for various embodiments.

Figure 12 illustrates hardware of a special purpose computing machine that may be configured to perform case-based adaptation in accordance with particular embodiments.

### DETAILED DESCRIPTION

Described herein are techniques for a case-based adaptation framework. In the following description, for purposes of explanation, numerous examples and specific details are set forth in order to provide a thorough understanding of embodiments of the present invention. Particular embodiments as defined by the claims may include some or all of the features in these examples alone or in combination with other features described below, and may further include modifications and equivalents of the features and concepts described herein.

System Overview

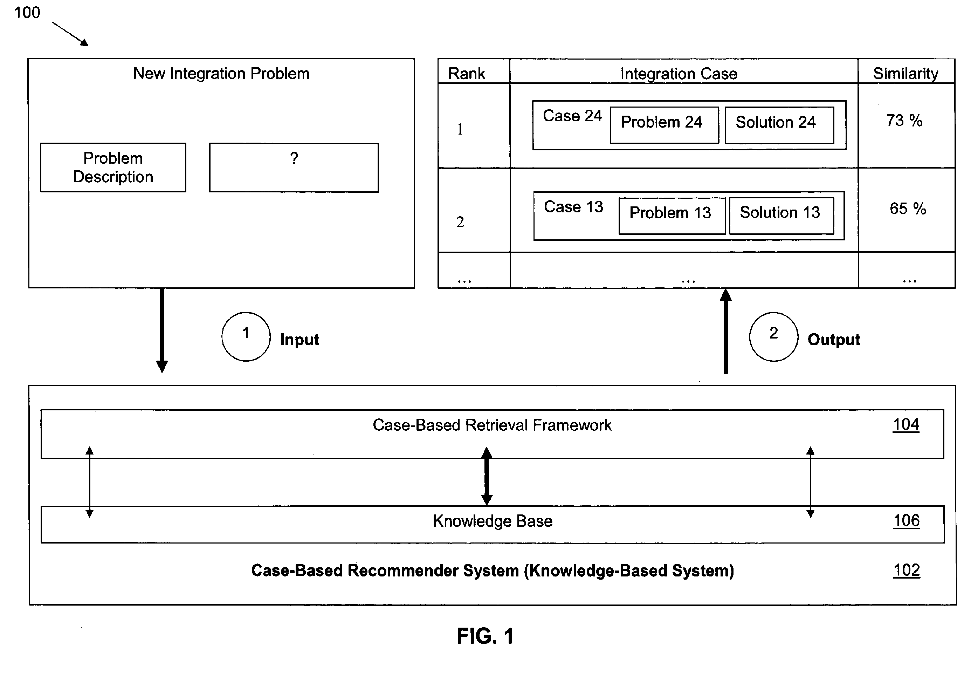

Fig. 1 depicts a system 100 for providing definition and retrieval of integration cases according to one embodiment. A case-based recommender system 102, which includes a case-based retrieval framework 104 and a knowledge base 106. Case-based retrieval framework 104 provides a platform with a knowledge base of already solved integration cases that can be leveraged for adapting a present problem. An integration case (also referred to herein as a customization case) is a description of a previous adaptation of the enterprise system that was performed. Case-based retrieval framework 104 retrieves integration cases that are similar to the present problem to allow a service integrator to adapt a problem solution of the already solved integration case as a solution for the present problem. The adaptation of the problem solution allows re-use of previous knowledge to adapt the enterprise system.

In one example, the service integrator inputs a new integration problem that includes a problem description into case-based retrieval framework 104. The integration problem may be considered an integration case also. However, the term integration problem is used for discussion purposes and is an integration cases that does not include a solution. Case-based retrieval framework 104 searches knowledge base 106 to determine integration cases that have been previously solved. Case-based retrieval framework 104 outputs the integration cases based on the similarity to the new integration problem. The service integrator may then use the integration cases, which include a problem description and problem solution to determine the solution for the new integration problem.

In one embodiment, case-based retrieval framework 104 is used when an extension to a standard enterprise system is being performed. Such a standard enterprise system is also referred to herein a packaged enterprise software. A standard enterprise system may be a standard software system, such as an enterprise resource planning (ERP), customer relationship management (CRM), supply chain management (SCM), or supplier relationship management (SRM) system. The standard enterprise system may be sent to a variety of companies. Each company may want to adapt or extend the standard enterprise system. For example, certain customizations may be performed, such as by adding new service integrator interface (UI) elements to core UI components, adding new process steps to core process models or even extending business objects with additional fields.

In one embodiment, the system integrator may want to integrate a complementary service into the standard enterprise system. The integration problem may be described based on different categories that define the problem, such as the categories of an integration goal, an integration context, and integration requirements. Based on the problem description, case-based retrieval framework 104 searches knowledge base 106 for similar integration cases that have already been solved in the past using a case retrieval algorithm. A list of existing integration cases is generated and output to the system integrator. The list contains integration cases that are ranked according to their computed similarity to the integration problem currently.

Once selected, an integration case may be adapted to the integration problem that is trying to be solved. Embodiments of the present invention relate to a framework for performing this adaptation.

Case-based Reasoning Cycle

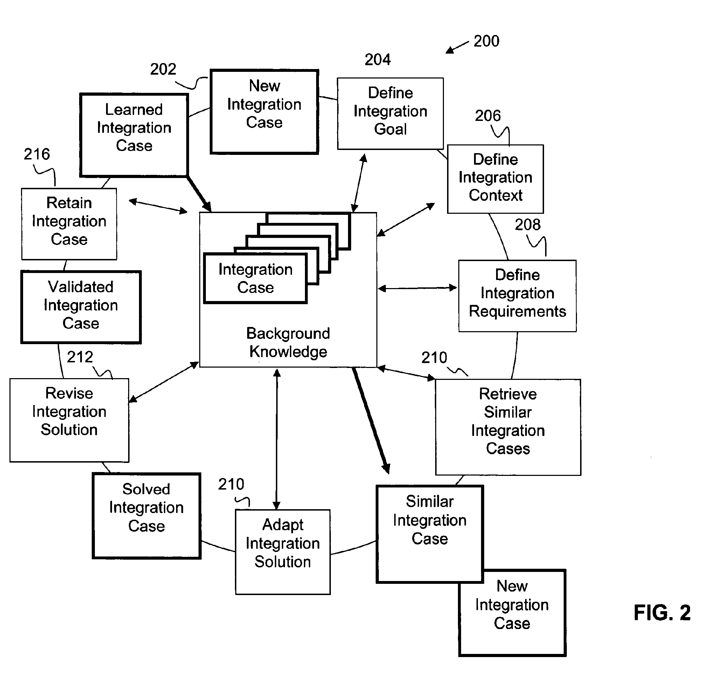

Particular embodiments use case-based reasoning for determining the integration cases. Fig. 2 depicts a case-based reasoning cycle 200 for service integration according to one embodiment. Particular embodiments focus on an adapt integration solution phase. However, the entire cycle will be described.

At 202, a new integration case is initiated. At 204, an integration goal phase is performed. The integration goal defines the general goal that should be reached by the integration solution. For example, the goal may indicate what kind of target system should be extended, what kind of customizing/flexibility use case should be implemented, or what kind of integration flavor should be implemented (e.g., a service integrator interface or process extension). As will be described below, the integration goal may be defined using a wizard-based questionnaire.

At 206, a define integration context phase is performed. The integration context defines the functional area within the enterprise system where the service should be integrated. For example, the functional area may be core UI or process components that need to be extended to integrate the service. The context may be a service context and/or a target system context. The service context is associated with the provider of the service and describes the context of a service that may be integrated. For example, the service may be provided by an outside provider and/or the enterprise. The service context may define what service should be integrated or what are the business semantics of the service.

The target system context is a consumer context, that is, the context associated with the customized enterprise system. The target system context determines which functional area of the enterprise system the service should be integrated (business semantics) or what components in the enterprise system should be extended (e.g., UI and/or process components). The integration context may be defined using a wizard-based questionnaire as will be described below.

At 208, a define integration requirements phase is performed. The integration requirements may be grouped into different categories that may describe requirements for the integration solution. For example, the categories may be UI extension requirements, process extension requirements, business logic extension requirements, technical integration requirements, and non-functional integration requirements. These integration requirements may be defined using the wizard-based questionnaire and will be described in more detail below.

At 210, a retrieve similar integration cases phase is performed. In this phase, existing integration cases that have problem descriptions that are considered most similar to the problem description of the new integration problem are determined and output. The similarity is computed using a range of different similarity measures. The different types of similarity measures may depend on different attributes defined in the new integration problem. Customization of weights for the different similarity measures may be provided and are described below.

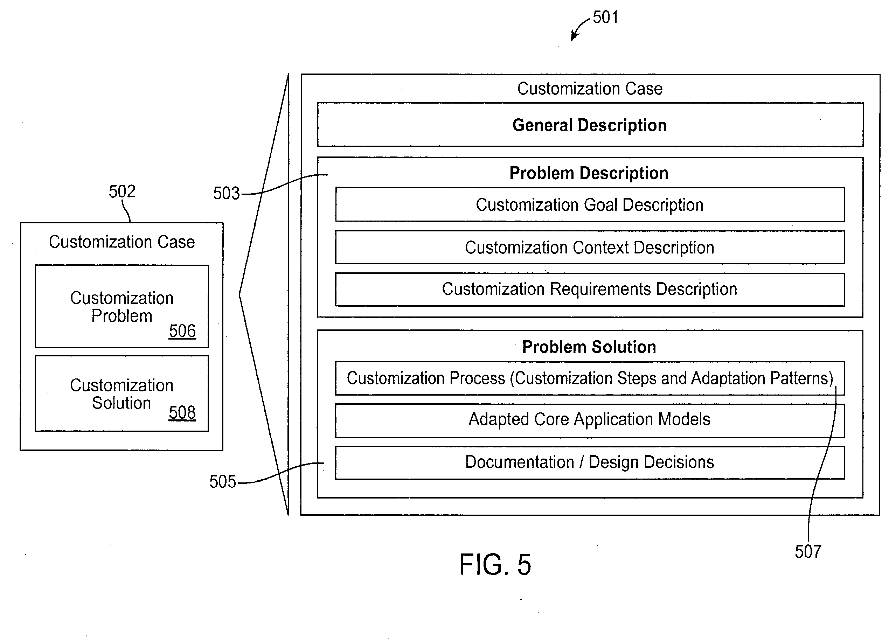

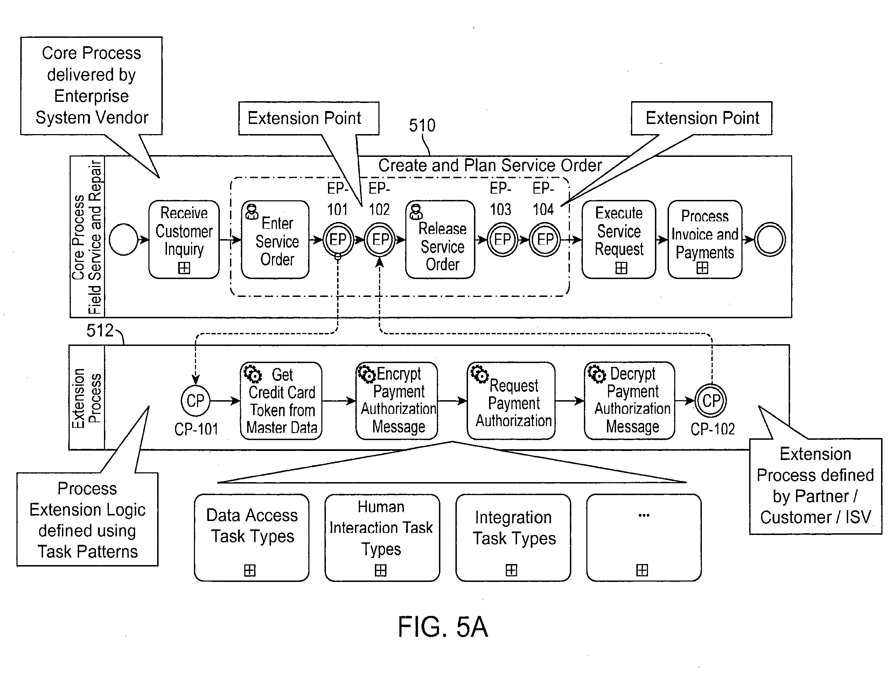

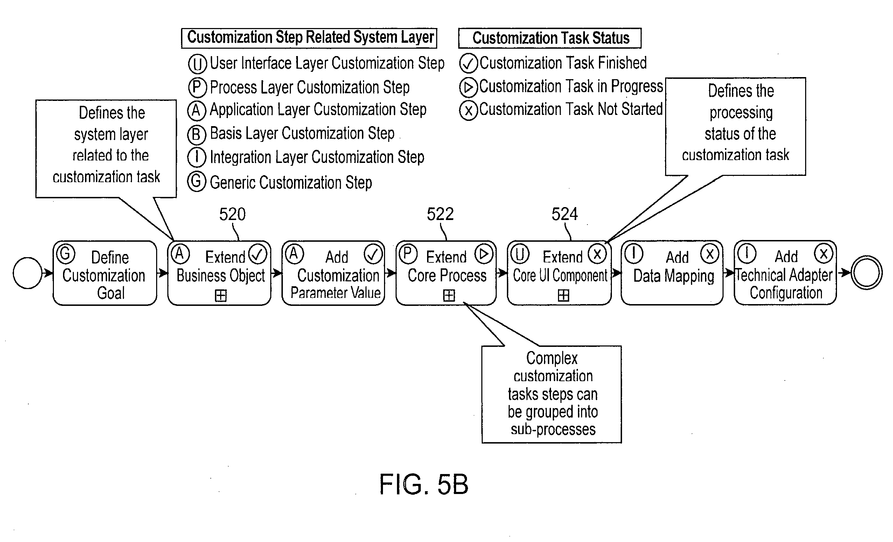

At 212, an adapt integration solution phase is performed. A similar integration case that is output may be selected and re-used as a template to be adapted with respect to the new integration problem. In one embodiment, a problem solution part of a similar case may be extracted and adapted to the new application context of the new integration problem to be solved. The integration solution may be modeled using adaptation patterns that may link patterns to extension points of service elements, add patterns, delete patterns, and replace patterns. The adaptation integration solution phase is described in more detail below in connection with Figure 5.

At 214, a revised integration solution phase is performed. In this phase, the adapted or solved new integration case is validated as to whether it meets the integration requirements. The criteria may include the correctness of the solution and quality of the solution.

At 216, a retain integration case phase is performed. After the solved new integration problem has been validated, an integration case with the problem description and the solution is stored in knowledge base 106. This case may be used in future cases to solve other integration problems. For example, case-based retrieval framework 104 may learn by the learning of a new experience (new integration case), learning of similarity knowledge (e.g. weights), or learning of adaptation knowledge.

Integration Case Description

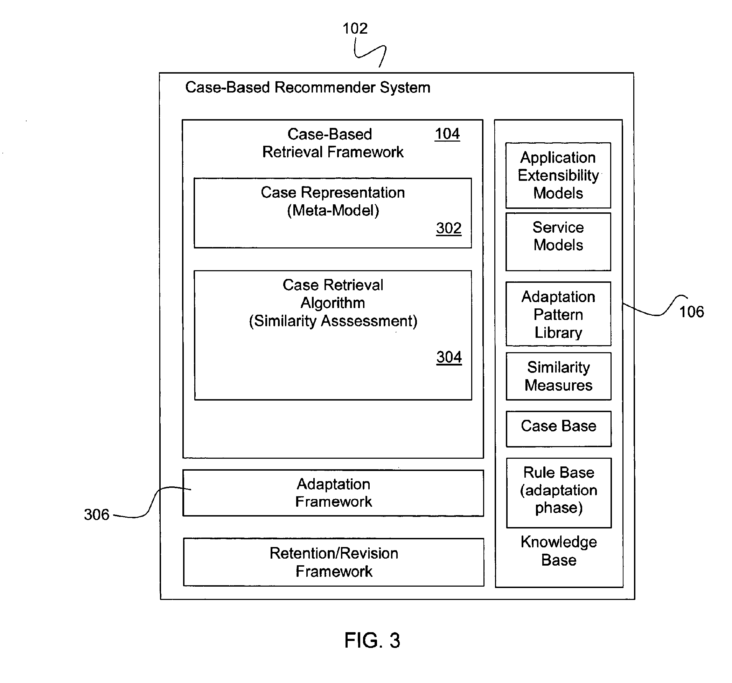

Fig. 3 shows a more detailed example of case-based recommender system 102 according to one embodiment. Case-based retrieval framework 104 includes a case representation meta-model 302 and a case retrieval algorithm 304. Knowledge base 106 also includes different information gleaned from previous integration cases, such as application extensibility models, service models, an adaptation pattern library, similarity measures, a case-base, and a rule base. As discussed extensively below, an adaptation framework 306 is used to adapt the similar integration cases.

Case representation meta-model 302 provides metadata that describes categories for a customization case. For example, Fig. 5 shows different categories included in a customization case 502 according to one embodiment. Broadly, customization case 502 includes a customization problem 506 and a customization solution 508.

Customization problem 506 is a description of the problem for the customization case. For example, a description of the problem may be what extension needs to be performed on the standard enterprise system. Customization problem 506 covers information to decide if this case is applicable for a new customization problem (query case). In one embodiment, the content includes the goal to be achieved by the customization solution, the context of the problem situation, and requirements/constraints for the customization solution.

Customization solution 508 is the solution for the problem. The solution for the problem may be how to extend, enhance, and/or modify the standard enterprise system. Customization solution 508 includes information that describes a solution to the integration problem sufficiently. For example, the information includes the solution itself (e.g., integration models, substantiated adaptation patterns, extended core models, other documentation), possible alternative solutions, feedback/solution evaluation, and justification/explanations.

At 501, the specific categories for integration case 502 are shown. The meta-model includes a problem description 503 (corresponding to customization problem 506) and a problem solution 505 (corresponding to integration solution 508).

Problem description 503 includes different attributes that can be defined for the problem. Although the attributes included in problem description 503 are described, case-based retrieval framework 100 is designed in such a way that it is possible to flexibly add further attributes and similarity measures. The attributes outlined are just examples. The integration goal description includes attributes that may define the enterprise system that should be extended, define the customizing or flexibility use case that should be implemented, or define the principle integration flavor of the service in the target consumption environment of the enterprise system.

Different attributes are described in Table 1 in Appendix A. The attributes of Appendix A are only examples, however, and the case description itself is extensible in the sense that further attributes can be added. The adaptation procedure discussed in detail below may utilize one or more of these attributes to compute the differences between the query and retrieved customization case.

The integration context description describes the service that should be integrated into the enterprise system and defines the business semantics of the service to be integrated. Also, in an enterprise system context, the business semantics of the target components in the enterprise system that should be extended by the new service, the target UI components of the enterprise system that should be extended/adapted, and the target process components of the enterprise system that should be extended/adapted may be defined. Different attributes for the integration context specification are described in Table 2 of Appendix A.

The integration requirements specification includes different categories of UI extension requirements, process extension requirements, business logic extension requirements, technical integration requirements, and non-functional requirements. UI extension requirements define how an existing UI component of the standard enterprise system should be extended in order to integrate the complementary service (delivered by a third party provider, e.g. ISV).

UI extension requirements are the requirements that define what is needed to extend the UI. UI extension requirements that define a textual description of the integration requirements, how the service should be triggered within a UI component, whether the UI component needs to be extended with additional UI controls, and whether the UI component needs to be extended with additional UI controls to gather information that is required to call the service or show/display result values of the service implication. Table 3 of Appendix A shows different attributes for the UI extension requirements specification.

Process extension requirements define how an existing process component of the standard enterprise system should be extended in order to integrate the complementary service (delivered by a third party provider, e.g. ISV). Process extension requirements may define the initiator of a process extension scenario, a position with respect to a process where the extension process should be plugged in, whether data should flow from a core process to an extension process, whether data should flow from the extension process to the core process, the communication mode between the core process and the extension process, whether multiple core processes are involved in the integration scenario, and whether multiple extension processes are involved in the integration scenario may be defined. Table 4 of Appendix A describes different attributes for process extension requirements.

Business logic extension requirements define how the existing business or application logic of the standard enterprise system should be extended in order to integrate the complementary service (delivered by a third party provider, e.g. ISV). Business logic extension requirements may define different attributes that may be associated with the business logic of an application. For example, the different attributes may define whether data returned from a service should be persistent in the enterprise system, whether the integration logic has to read data from the enterprise system, whether the integration logic has to write data into the enterprise system, whether the integration logic needs to access additional business logic on the enterprise system, whether an interactive service integrator task is required in the integration logic, whether a human service integrator task is required in the integration logic, whether a customizing parameter has to be set/adjusted in the enterprise system, and whether a new customizing parameter has to be added to the enterprise system. Table 5 of Appendix A describes attributes in the business logic extension requirements.

External service integration requirements describe requirements that are used to define how to integrate external services. The attributes define whether standard business-to-business (B2B) protocols should be used for the communication with the external service and which technical communication protocols should be used for the communication with the external service. Table 6 of Appendix A shows different attributes for the external service integration requirements.

Non-functional integration requirements define non-functional constraints that the extension logic defined by the service integrator should fulfill. Non-functional integration requirements define whether the integration logic needs to authenticate in the communication with the external service, whether the communication is performance-critical and if caching mechanisms are required, whether the communication with the external service should be logged, whether the messages sent to the service or received from the service should be encrypted, whether the messages sent to the service or received from the service should be digitally signed, and whether some specific transaction handling is required. Table 7 of Appendix A shows different attributes for non-functional integration requirements.

Adaptation

Particular embodiments may promote the integration of complementary services into standard enterprise systems utilizing a case-based reasoning approach. In particular, the present disclosure proposes systems and methods for a case-based adaptation framework allowing adaptation of an existing customizing solution (from a previous case) to a new, unsolved integration, adaptation, or extension problem.

As mentioned above, Case-Based Reasoning seeks to remember previous similar situations (cases), and then reuse information and knowledge about the stored cases in addressing new problems. One hurdle faced in the Case-Based-Reasoning Cycle, is the adaptation of an existing solution within a new problem context. This aspect is referenced hereafter as adaptation, and is designated in Figure 2 by the reference number 212.

According to particular embodiments, a customization case adaptation may be realized by a case adaptation engine. Specifically, during case retrieval the system integrator may have selected a customization case for reuse. That customization case is now to be adapted to the new application context.

In the overall CBR cycle, case adaptation may involve domain-dependent adaptation knowledge in combination with appropriate adaption methods. Customization case adaptation may be used as the customization problem definition of the query customization case, may not completely match with the customization problem of the retrieved customization case.

Particular embodiments may rely upon a transformation adaptation approach in which the problem solution of a retrieved case is transformed into a new problem solution of the query case, typically by the application of adaptation rules. According to certain embodiments, a transformational adaptation method may be embedded into an interactive, semi-automatic customization procedure that provides recommendations on possible adaptation steps to the system integrator.

According to particular embodiments, content of a customization case can be formalized as a Meta-Model having a problem description and a problem solution, with specific focus on the formalization of the solution part by the introduction of an adaptable customization process or solution plan.

Accordingly, the Figure 5 previously discussed shows a Meta-Model corresponding to a customization case utilizing adaptation according to a particular embodiment. The Meta-Model includes a problem description 503 (corresponding to customization problem) and a problem solution 505 (corresponding to a customization solution).

As shown in Figure 5, a customization process 507 is used as solution plan within the case problem solution part 505. A customization process covers customization tasks or steps processed to implement a customization solution (i.e. cookbook). The customization tasks cover typical, recurring adaptation patterns across multiple system layers. The customization process can be reused in a new application context. The customization process thus covers the steps that a system integrator performs to adapt or extend a standard enterprise system to implement a certain adaptation or extension requirement.

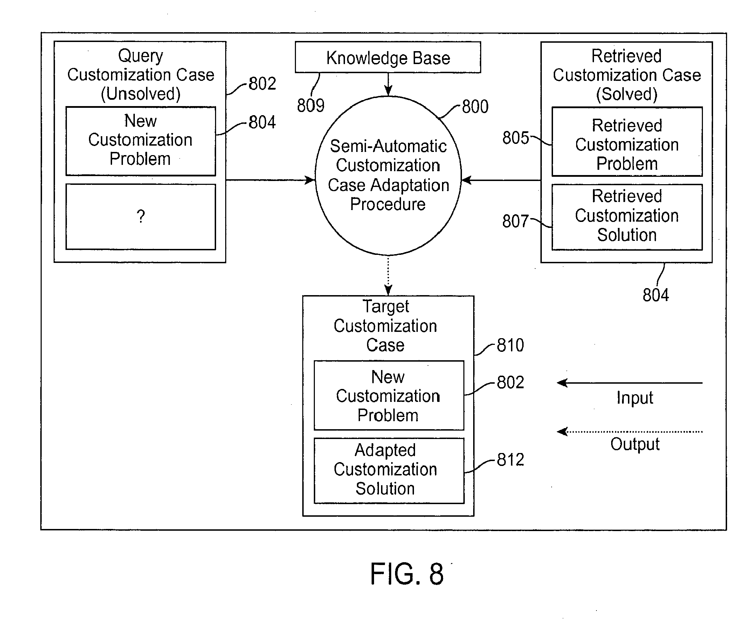

The following describes a customization process as a solution plan of an integration case. According to a basic adaptation procedure, during the adaptation phase the solution plan of the retrieved case can first be adapted to the meet the new integration requirements. The adapted customization process / solution plan can then be executed (replayed) in the new application / target context. The basic adaptation procedure is described in detail below starting with Figure 8.

Figures 5A-B illustrate the use of an adaptation framework according to an embodiment, in a customization case wherein a core process is being adapted for extension. In particular, Figure 5A illustrates a core process 510 comprising field service and repair, delivered by an enterprise system vendor. This core process includes one or more extension points allowing integration with another process.

Figure 5A also illustrates the extension process 512 which allows a payment transaction for the field service repair. This extension process is defined by a partner /customer / ISV, rather than by the enterprise system vendor. The extension process includes various task types, such as data access, human interaction, and integration task types.

Figure 5B shows the customization process. An application layer customization step 520 extending a business object, defines the system layer related to the customization task. A process layer customization step 522 extending a core process, allows complex customization tasks steps to be grouped into sub-processes. A user interface layer customization step 524 extending a core user interface component, defines the processing status of the customization task.

Use of a customization process/solution plan for the integration case problem part according to certain embodiments, may offer one or more benefits. For example, such an approach may match the way in which system integrators work. It can allow integrators to build on existing software or organizational process models that cover change procedures (e.g. ITIL / COBIT / ISO Governance Frameworks).

Moreover, this approach may support the documentation of an adaptation /extension solution. It can allow integration of automated steps as well as manual steps, allow inclusion of different roles in an integration process, and/or allow the integration of different tools and editors.

In addition, this approach offers extendibility for the future, as it is able to integrate new patterns. The approach may be platform independent, allowing transfer to different platforms. Finally, the approach can readily be recorded in Enterprise Systems.

The development process of customization solutions in general is a design-intensive process characterized by an intensive human expert involvement. Customization solutions can differ in their complexity from simple to complex customization solutions. Furthermore, customization solutions can highly differ in granularity from fine-grained adaptation solutions to complete Add-On solutions complementing core enterprise system functionality.

Figure 8 is a simplified view showing an overview on an embodiment of the customization case adaptation procedure 800. This customization case adaptation procedure may be based on a mixture of transformational and derivational adaption methods.

On the left-hand side the query customization case (QCC) 802 is shown. This case represents the new customization problem 804 to be solved by the system integrator, that has been defined during the first phase of the customization experience management cycle. It has not yet received a customization solution part.

On the right hand side of Figure 8 the retrieved customization case (RCC) 804 is shown. The RCC includes both a retrieved customization problem 805 and a retrieved customization solution 807. The RCC has been selected by the system integrator for reuse at the end of the customization case retrieval phase.

Both the QCC and RCC are inputs to the semi-automatic customization case adaptation procedure 800. The adaptation procedure 800 references a knowledge base 809 to generate a target customization case (TCC) 810 as output. The target customization case includes both the new customization problem 802, and an adapted customization solution 812.

The customization case adaptation procedure was developed based upon three design decisions. First, transformational adaptation served as a foundation.

In particular, the inherent complexity of customization solutions itself results in complexity of reusing past customization solutions in a new application context. There may not exist sufficient complete, general domain knowledge available in the context of customization of enterprise systems due to its very design-intensive nature. Accordingly, a transformational adaptation approach may combine substitutional as well as structural adaptation methods. Using such transformational adaptation it is possible to change the structure of the retrieved customization solution (e.g. by modifying, inserting, deleting or replacing elements of the customization solution).

A second design decision utilized human expert controlled case adaptation. A principle of the approach is the dedicated involvement of the system integrator as the human expert within the case adaptation process, by providing recommendations on how to adapt the retrieved customization case to the new problem context. This approach concentrated on a semi-automatic adaptation approach allowing the system integrator control during this phase.

In order to provide recommendations for the system integrator on how to adapt the retrieved case, the customization adaptation algorithm relies on adaptation rules. Each adaptation rule represents certain domain knowledge about how a retrieved customization case must be changed if its problem part differs in a specific characteristic from the query customization case. By applying adaptation rules within the customization case adaptation phase, the CAPE Framework is enhanced from a pure Case-Based Reasoning system into a hybrid intelligent system.

A third design decision involved including aspects from derivational adaptation approaches. Each customization solution includes a customization process comprising customization tasks (e.g. core model adaptation tasks) that have been conducted on the various system layers of a packaged enterprise system to solve the related customization problem. As such, the customization process can be seen as the solution plan, on how the customization problem has been solved.

A principle of the proposed customization case adaptation algorithm is to first adapt the customization process of the retrieved customization case which is afterwards semi-automatically executed in the new problem context of the target customization case. In a core part of the customization case adaptation algorithm, the solution plan (customization process) of the retrieved customization case is adapted based on the differences of the customization problem parts of the query customization case and the retrieved customization case.

This approach is related to a derivational adaptation method of replaying a past reasoning trace (in our case the customization case) in the new problem context (in our case the target customization case). However, in contrast to classical derivational adaptation methods, a from-scratch problem solver (e.g. a planning component) is not employed to generate the parts of the solution that do not fit.

Rather, the customization process of the retrieved customization case (= source solution plan) is semi-automatically transformed to the customization process that fits to the goal, context and requirements of the target customization case (= target solution plan). This transformation is based on the differences between the problem descriptions of both cases and is implemented with the help of adaptation rules. This approach comprises plan adaptation.

In view of the three design decisions, the customization case adaptation procedure is primarily transformation-based. However it combines this method with aspects from a derivational adaptation strategy through the applied concept of plan adaptation.

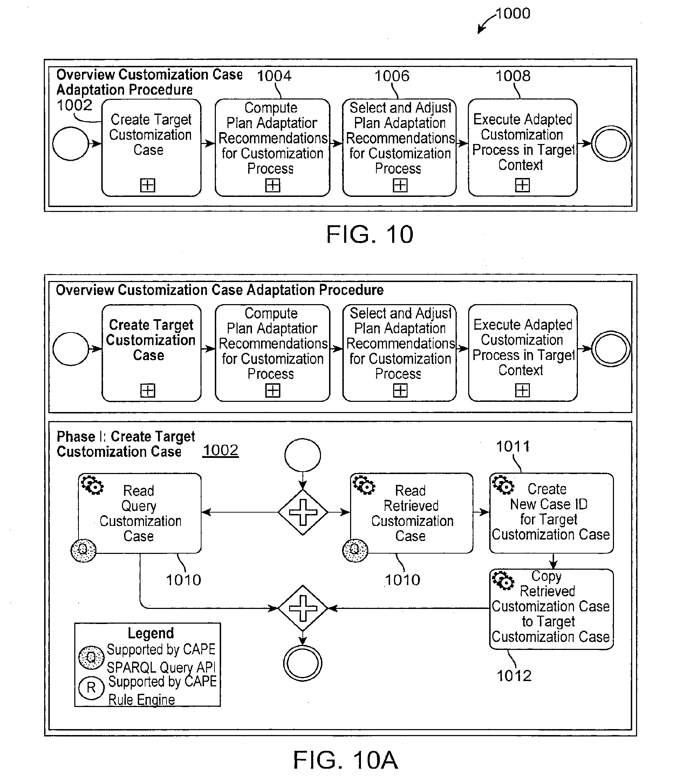

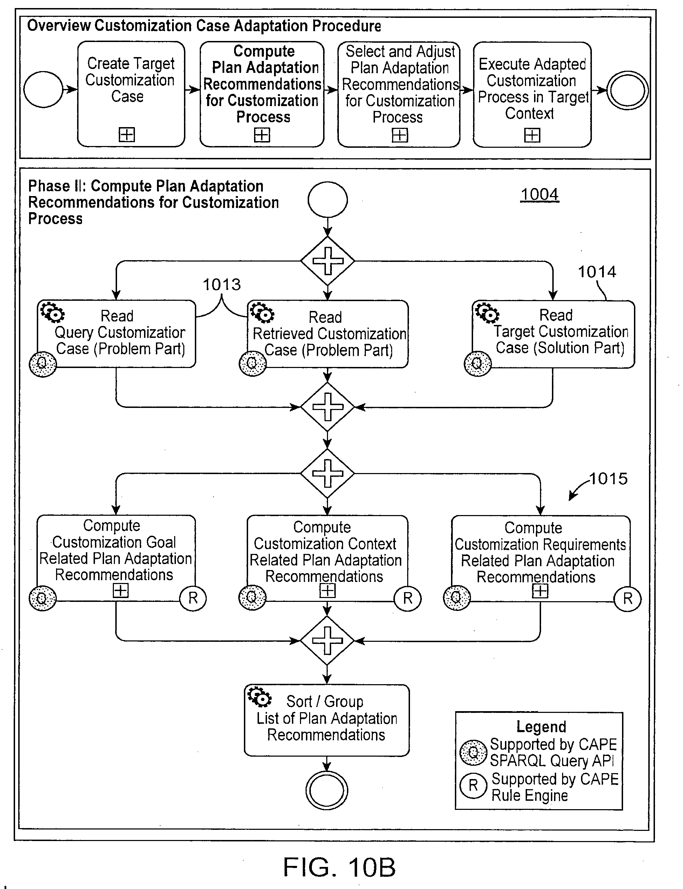

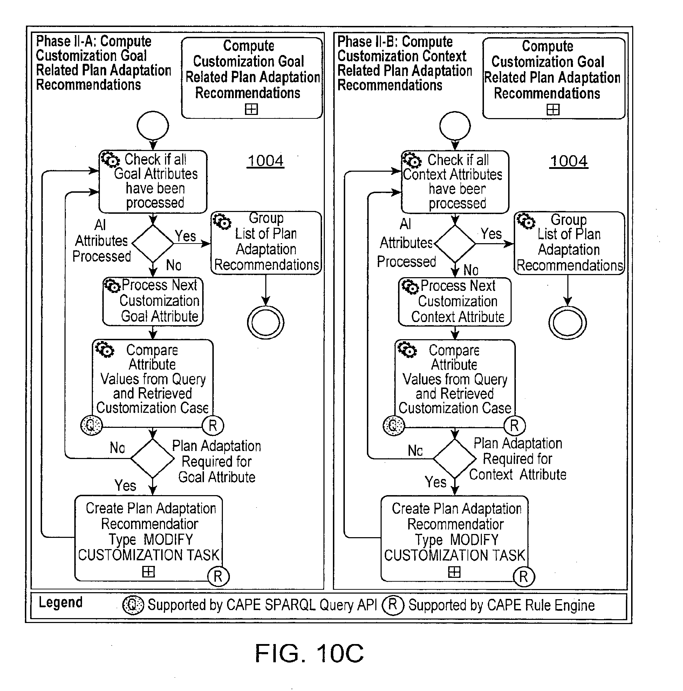

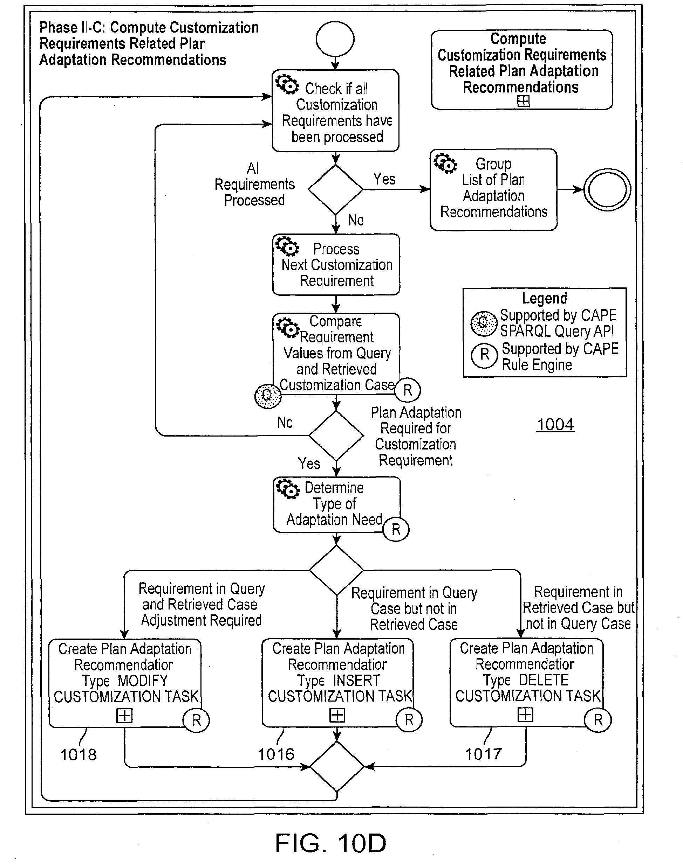

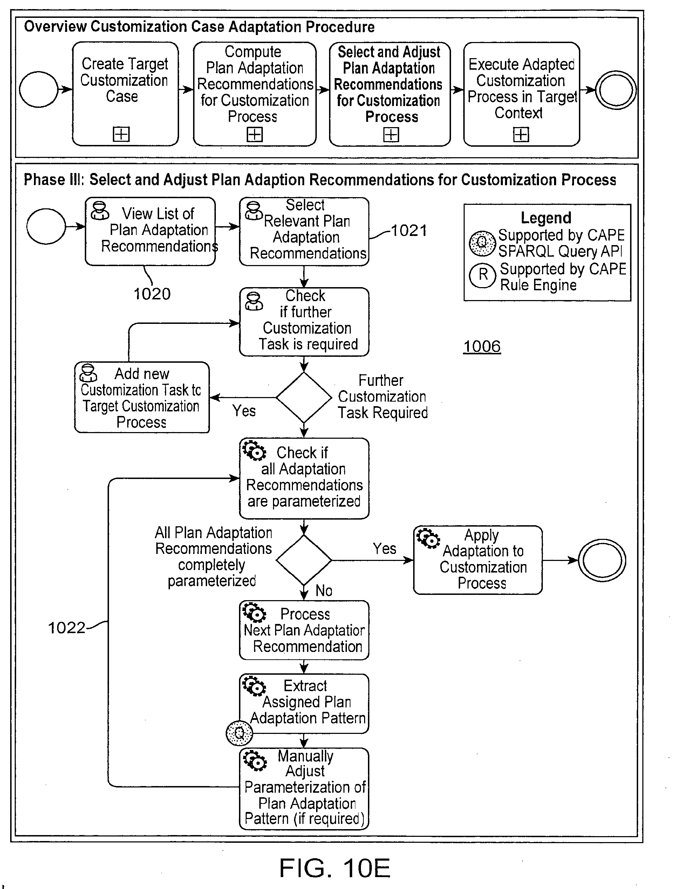

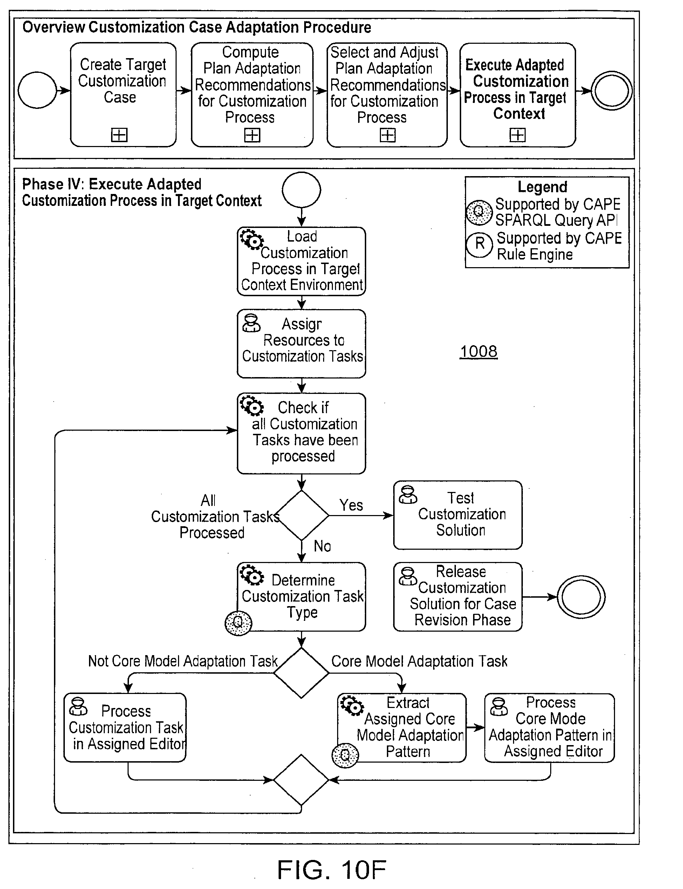

Figure 10 shows an embodiment of a customization case adaptation procedure as a process model. The customization case adaptation procedure 1000 is divided into four major phases 1002, 1004, 1006, and 1008 that are shown as collapsed sub-processes in Figure 10. Figures 10A-F (discussed further below) depict these sub-processes according to particular embodiments.

In a first phase (Phase I) 1002, the target customization case is created. During the customization case retrieval phase, the system integrator has selected one customization case for reuse (= retrieved customization case). The target customization case is created as an initial copy of the retrieved customization case. Details of this phase of the customization case procedure are described in connection with Figure 10A.

In a second phase (Phase II) 1004, plan adaptation recommendations for the customization process are computed. Specifically, the customization process (solution plan) of the target customization case is extracted. Based on differences between the customization problem definitions of the query and retrieved customization case, a list of plan adaptation recommendations is generated. These recommendations suggest how the customization process of the target customization can be adapted. Details of this phase of the customization case procedure are described in connection with Figures 10B-D.

In a third phase (Phase III), plan adaptation recommendations for the customization process are selected and adjusted. In particular, the system integrator can accept, reject, and/or manually complete parameterization of suggested plan adaptation recommendations for the customization process. Selected changes are applied to the target customization process (and to its sub processes if appropriate). Details of this third phase of the customization case procedure are described in connection with Figure 10E.

In a fourth phase (Phase IV), the customization process is executed in a target context. Specifically, as a result of the previous steps the customization process of the target customization case has been adapted to the target customization case problem context, and can now be executed in this context by semi-automatically processing customization tasks. Details of this phase of the customization case procedure are described in connection with Figure 10F.

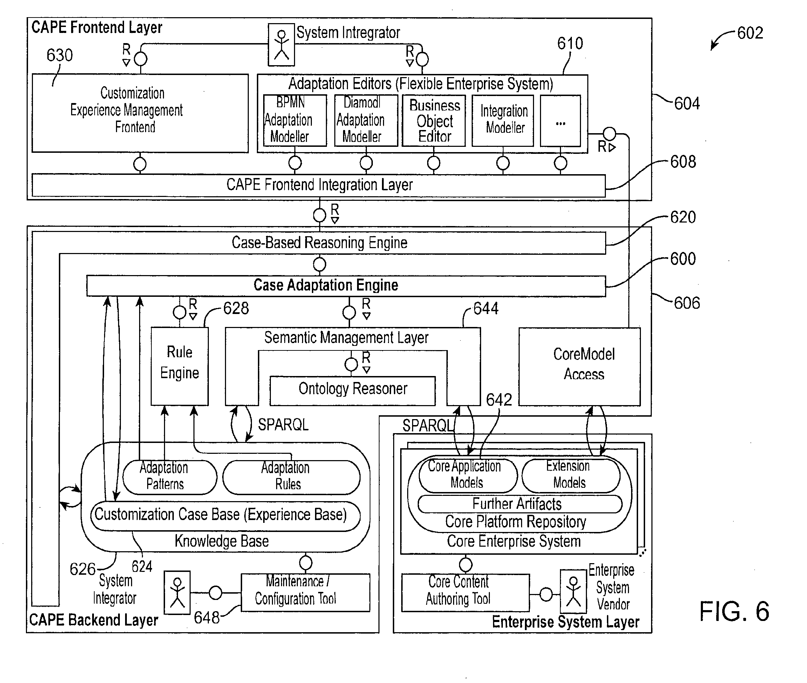

The customization case adaptation procedure is technically implemented by a case adaptation engine of the CAPE Framework, that is discussed in detail below in connection with Figure 6. The following Figures 10A-F accordingly utilize a notation to describe the procedure in a manner allowing differentiation between automated steps performed by the case adaptation engine (modeled as service task types), and interactive steps performed by the system integrator (modeled as manual task types). In addition, the symbols Q and R are also included to indicate whether a certain step of the procedure is supported by the CAPE rule engine or the SPARQL Query API that is part of the semantic management layer shown and discussed further below in connection with Figure 6.

Figure 10A is a process flow showing details of the first phase of Figure 10. Creation of the target customization case in this phase is triggered as soon as the system integrator has selected a retrieved customization case for reuse.

First, in step 1010 the query customization case and the retrieved customization case are both loaded and read by the case adaptation engine. Both steps are supported by the CAPE SPARQL Query API. Afterwards, in step 1011 a new case identifier is generated and in step 1012 the target customization case is created as an initial copy of the retrieved customization case.

The case adaptation engine may create a deep copy for each software artifact that has been developed within the retrieved customization case. Adaptation operations in the further phases of the algorithm can then be applied to the software artifacts of the target customization case.

Figure 10B is a process flow showing details of the second phase of Figure 10 wherein plan adaptation recommendations are computed. In the previous phase, the target customization case has been created as a deep copy of the retrieved customization case. As part of this second phase of the adaptation algorithm, plan adaptation recommendations are computed regarding how the target customization should be adapted.

First, in step 1013 the customization problem parts of the query customization case as well as from the retrieved customization case, are loaded. In addition, in step 1014 the customization solution part of the target customization case is read by the case adaptation engine. All three steps are supported by the CAPE SPARQL Query API.

The adaptation algorithm adapts the customization process (solution plan) of the target customization case. For this purpose, differences in the customization problem descriptions of the query customization case and the retrieved customization case are analyzed.

The problem description of a customization case is divided into three parts: customization goal, customization context, and customization requirements. The query customization case might differ in each of these parts from the retrieved customization case, and each difference might involve an adaptation of target case customization process (e.g. by modifying, inserting or deleting a customization task of the customization process - plan adaptation).

Therefore, the customization case adaptation procedure shown in Figure 10B includes three parallel steps 1015 that compute (1) the customization goal related plan adaptation recommendations, (2) the customization context related plan adaptation recommendations, and (3) the customization requirements related plan adaptation recommendations. All three steps are supported by the CAPE SPARQL Query API and the CAPE rule engine.

Computation of the plan adaptation recommendations is now described in three separate sub-processes. Figure 10C shows the details for the computation of (1) the customization goal related plan adaptation recommendations, and (2) of the customization context related plan adaptation recommendations. For the computation of customization goal related plan adaptation recommendations (left-hand side of Figure 10C) the case adaptation engine loops over each attribute of the customization goal description. For each goal attribute, the values of the query customization case and the retrieved customization case are compared. If both attribute values are not equal, a plan adaptation recommendation is generated to modify the relevant customization task in the target case customization process. If related attributes of the goal description have been processed, generated plan adaptation recommendations are grouped. Comparison of attributes and their related plan adaptation recommendations are implemented using plan adaptation patterns and adaptation rules.

For the computation of customization context related plan adaptation recommendations (right-hand side of Figure 10C) the case adaptation engine loops over each attribute of the customization context description, based on the same principle as described for the customization goal attributes: for each context attribute the values of the query customization case and the retrieved customization case are compared. If both attribute values are not equal, a plan adaptation recommendation is generated in order to modify the relevant customization task in the target case customization process. Finally, generated plan adaptation recommendations are grouped together. The comparison of attributes and their related plan adaptation recommendations are implemented using plan adaptation patterns and adaptation rules.

Figure 10D shows that the customization requirements related plan adaptation recommendations are computed, using plan adaptation patterns and adaptation rules. The case adaptation engine loops over all attributes of the customization requirements description. Thus customization requirements on the various system layers of an enterprise system are processed. For each requirement attribute, the values of the query customization case and the retrieved customization case are compared.

Analysis of the attribute values of the query customization case and the retrieved customization case can have four different outcomes. In one possible outcome, both requirements have exactly the same value and therefore no adaptation action is required.

According to a second possible outcome, there is a recommendation 1016 to insert a customization task. The query customization case has a customization requirement that was not required in the retrieved customization case. Therefore, the case adaptation engine generates a plan adaptation recommendation to insert a new customization task into the customization process of the target customization case in order to handle this difference.

In a third possible outcome, there is a recommendation 1017 to delete customization task. The retrieved customization case has a customization requirement that is not required in the query customization case that needs to be solved. Therefore, the case adaptation engine generates a plan adaptation recommendation to delete the customization task that is related to the requirement from the customization process of the target customization case in order to handle this difference.

In a fourth possible outcome, there is a recommendation 1018 to modify customization task. Both the query customization case and the retrieved customization case have a common customization requirement. However, they differ in the specific characteristic of the requirement. Therefore, the case adaptation engine generates a plan adaptation recommendation to modify the parameterization of the related customization task in the customization process of the target customization case in order to handle this difference.

Analysis of case attribute values as well as the derivation of appropriate plan adaptation recommendations, is implemented using adaptation rules.

Returning to Figure 10B, the computed plan adaptation recommendations are grouped together. The recommendations may optionally be sorted as shown in the last step of Figure 10B.

The first two phases just described of the customization case adaptation procedure are processed by the case adaptation engine without interaction with the system integrator. Note, at the end of phase two in the procedure, the case adaptation engine has only computed plan adaptation recommendations. However, the target customization case has not yet been physically changed.

In phase three, the system integrator may now become actively involved in selecting and adjusting the plan adaptation recommendations. This is shown in detail in Figure 10E.

First, the system integrator can view 1020 the list of plan adaptation recommendations. As described in the previous sections, one design principle is to provide assistance to the system integrator, but leaving him or her in full control over the adaptation process. Therefore, the system integrator can select 1021 the relevant plan recommendations out of the set that has been suggested by the case adaptation engine in the Phase II.

The system integrator can also manually add further customization tasks to the target customization process that have not been suggested by the case adaptation engine. This allows the system integrator to explicitly control the adaptation process and use his expert design knowledge during reuse of the retrieved customization knowledge in the new problem context.

A plan adaptation recommendation may be parameterized or manually adjusted by the system integrator in order to obtain decisions from the human expert. As shown in the loop 1022 in the lower part in Figure 10E, the algorithm iterates on proposed plan adaptation recommendations that need to be manually completed.

Each plan adaptation recommendation is related to a plan adaptation pattern that actually defines the change operation related to a customization task (e.g. insert, delete or modify). The parameterization of a plan adaptation recommendation is therefore related to its encapsulated plan adaptation pattern.

Finally, if plan adaptation recommendations have been parameterized, the related change operations are applied to the customization process of the target customization case. As a result of this Phase III, the customization process of the target customization case has been adapted to the new problem situation of the target case context. Thus the solution plan of the retrieved customization case has been physically adapted.

As described previously, the customization process of the target customization case has been semi-automatically adapted in order to reflect the customization goal, customization context and customization requirements from the target customization case. The customization process is now ready to be executed in the target case context in order to actually perform the adaptation of the core enterprise system.

Figure 10F shows this last phase in the customization case adaptation algorithm, wherein the customization process is executed in a target context. First, the case adaptation engine loads the customization process in the target context environment. The customization process comprises multiple customization tasks to be conducted to solve the customization problem.

In the next step, human resources (e.g. specific experts) can be assigned to the different customization tasks. In this respect, the customization process can also be used as a foundation for project management aspects within the customization project. The customization tasks can then be performed by the assigned experts in the appropriate adaptation editors of the underlying enterprise system.

At this point in the customization case adaptation procedure, the CAPE Framework interfaces with the various, platform-specific development tools that together comprise the development infrastructure of the underlying packaged enterprise system. In the case of a core model adaptation task (specific customization task), the procedure therefore extracts the core model adaptation pattern that is related to the customization task. The relevant adaptation editor of the core enterprise system is then opened and the respective customization task can be performed by the assigned expert.

If customization tasks have been successfully implemented, the customization solution can be tested and finally released for the customization revision then occurring within the customization experience management cycle.

Within the CAPE Framework, the customization case adaptation procedure is implemented by the case adaptation engine. Figure 6 is a simplified view of the overall architecture of an embodiment of the CAPE Framework 602, including the case adaptation engine 600 present therein.

The case adaptation process is triggered by the system integrator by selecting a retrieved customization case for reuse after the case retrieval. This step is implemented by the CAPE Experience Management Frontend component 604 that is integrated with the CAPE Backend Layer 606 through the CAPE Frontend Integration Layer 608.

Through the CAPE Frontend Integration Layer, the CAPE Experience Management Frontend is integrated with adaptation editors 610 for the core enterprise system.

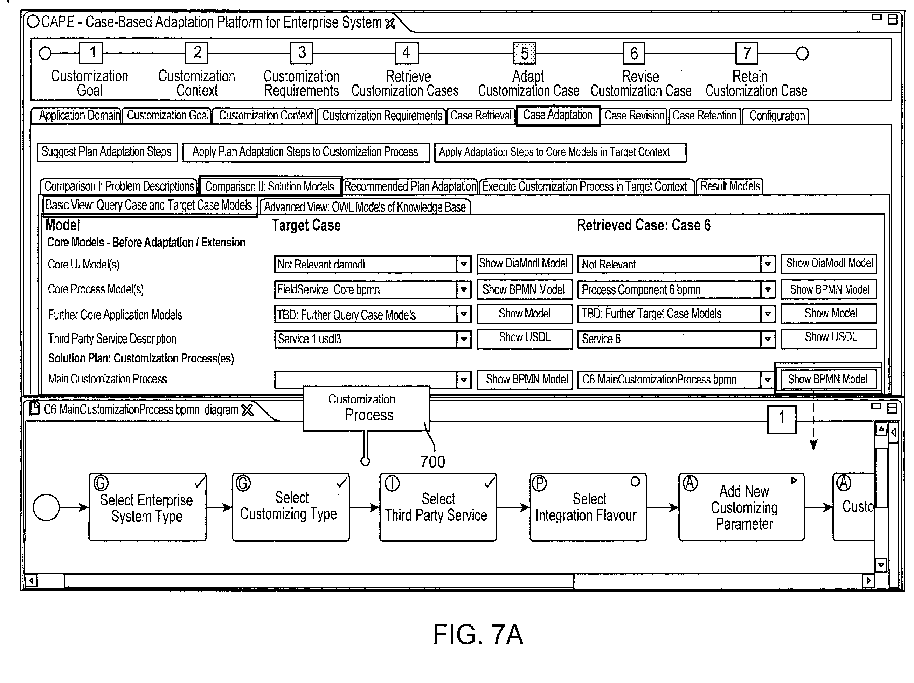

The CAPE Experience Management Frontend includes specific sub-components providing various user interfaces for the case adaptation related tasks. For example Figure 7A of the Example discussed below, shows a user interface that allows viewing of the case content of the retrieved as well as of the target customization case. This also allows viewing of related models of the case solution parts in the related editors.

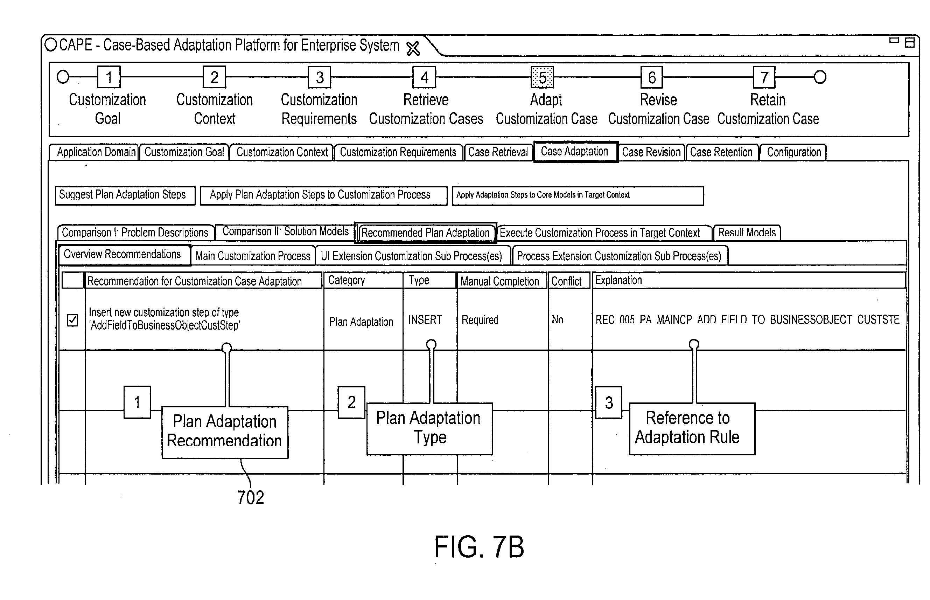

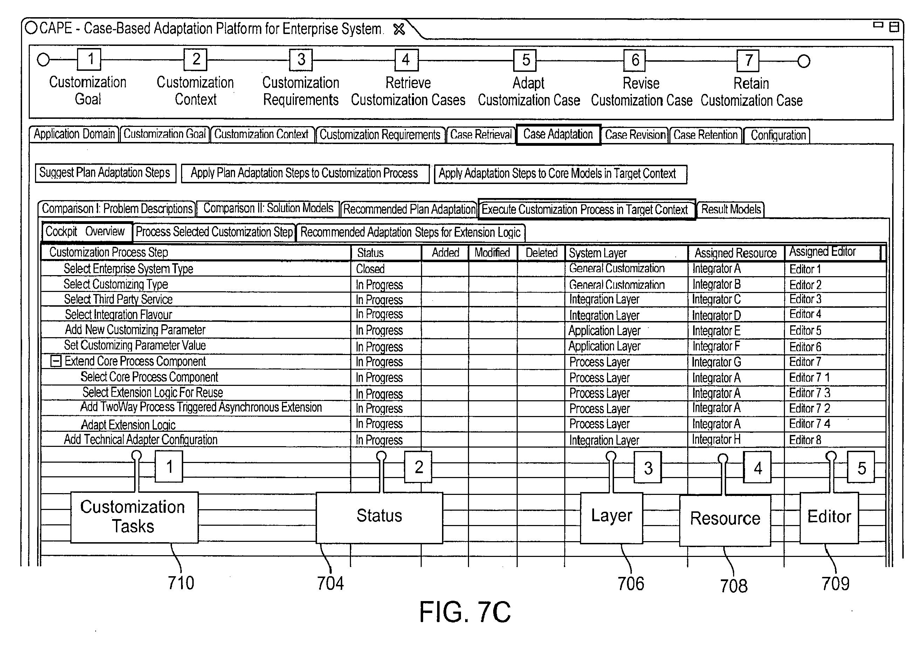

Figure 7B of the Example discussed below, shows a user interface to view and parameterize the plan adaptation recommendations. Figure 7C of the Example discussed below, shows one overview cockpit to control the adapted customization process in the target context.

The Case-Based Reasoning Engine 620 is a component in the CAPE Backend that coordinates CAPE activities and triggers the case adaptation engine 600 that performs activities within the case adaptation phase.

First, the case adaptation engine provides the functionality to create the initial version of the target customization case (as a copy of the retrieved customization case). For this purpose, the case adaptation engine has write access to the customization case base 624.

In order to provide the plan adaptation recommendations, the case adaptation engine reads the query-, retrieved- and target customization case from the knowledge base 626, and puts them as input facts on the rule engine 628.

The rule engine then starts to evaluate the differences between both cases and generates plan adaptation recommendations as defined by the adaptation rules. The rule engine may evaluate the adaptation rules using a forward chaining reasoning method and an underlying Rete algorithm. As an output, the rule adaptation engine generates plan adaptation recommendation objects as output facts. The case adaptation engine reads the computed recommendations from the working memory of the rule engine. They are afterwards displayed in the Customization Experience Management Frontend 630.

After the system has parameterized the plan adaptation patterns, the case adaptation engine provides a change API to physically change the customization process of the target customization case. The case adaptation engine itself triggers the change, and the change is physically implemented by the semantic management layer 644. The case adaptation engine also provides an overview cockpit on the processing status of the customization process in the target context.

To access the core application models (e.g. core process models) 642 or to query the customization process, the case adaptation engine uses the query services provided by the semantic management layer 644.

The adaptation rule base 646 can be configured and maintained through the maintenance/configuration tool 648.

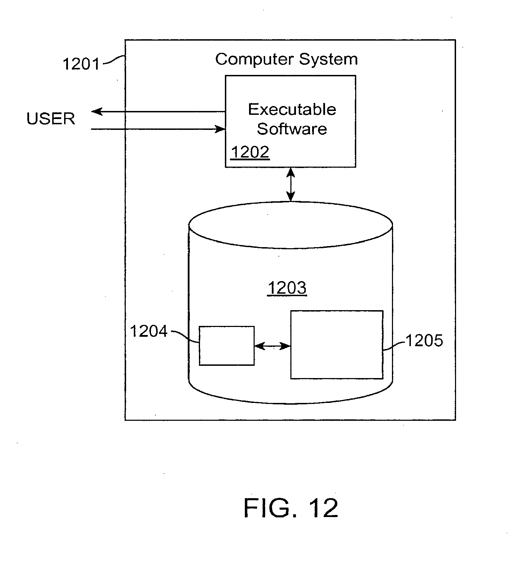

Fig. 12 illustrates hardware of a special purpose computing machine. This computing machine may be configured to perform case-based adaptation in accordance with particular embodiments.

In particular, computer system 1200 comprises a processor 1202 that is in electronic communication with a non-transitory computer-readable storage medium 1203. This computer-readable storage medium has stored thereon code 1205 corresponding to the case adaptation reasoning engine. Code 1204 corresponds to a knowledge base referenced by the case adaptation engine in performing the case adaptation procedure as has been described above. Code may be configured to reference data stored in a database of a non-transitory computer-readable storage medium, for example as may be located in a remote database server or a file system.

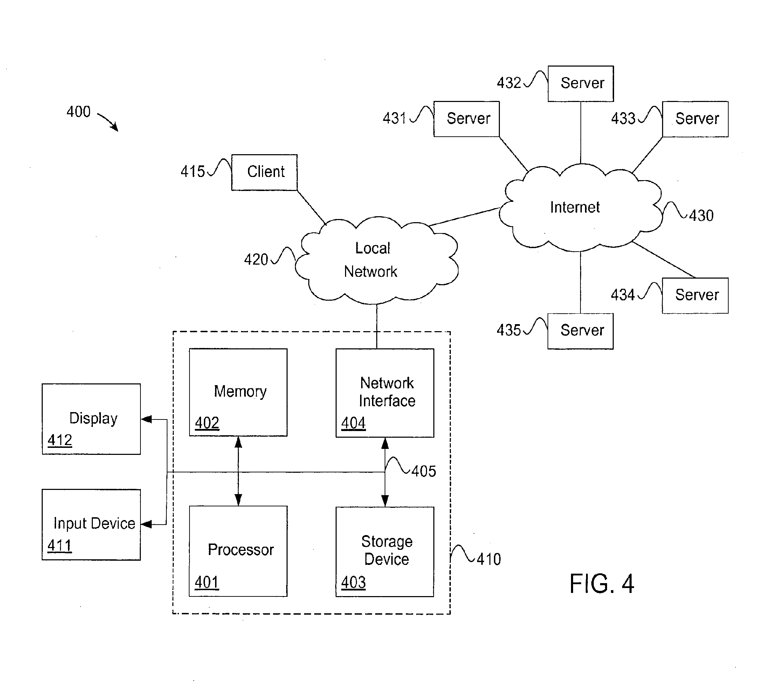

Fig. 4 illustrates hardware of a special purpose computing machine configured with a case-based adaptation framework according to one embodiment. An example computer system 410 is illustrated in Fig. 4. Computer system 410 includes a bus 405 or other communication mechanism for communicating information, and a processor 401 coupled with bus 405 for processing information. Computer system 410 also includes a memory 402 coupled to bus 405 for storing information and instructions to be executed by processor 401, including information and instructions for performing the techniques described above, for example. This memory may also be used for storing variables or other intermediate information during execution of instructions to be executed by processor 401. Possible implementations of this memory may be, but are not limited to, random access memory (RAM), read only memory (ROM), or both. A storage device 403 is also provided for storing information and instructions. Common forms of storage devices include, for example, a hard drive, a magnetic disk, an optical disk, a CD-ROM, a DVD, a flash memory, a USB memory card, or any other medium from which a computer can read. Storage device 403 may include source code, binary code, or software files for performing the techniques above, for example. Storage device and memory are both examples of computer readable storage mediums.

Computer system 410 may be coupled via bus 405 to a display 412, such as a cathode ray tube (CRT) or liquid crystal display (LCD), for displaying information to a computer service integrator. An input device 411 such as a keyboard and/or mouse is coupled to bus 405 for communicating information and command selections from the service integrator to processor 401. The combination of these components allows the service integrator to communicate with the system. In some systems, bus 405 may be divided into multiple specialized buses.

Computer system 410 also includes a network interface 404 coupled with bus 405. Network interface 404 may provide two-way data communication between computer system 410 and the local network 420. The network interface 404 may be a digital subscriber line (DSL) or a modem to provide data communication connection over a telephone line, for example. Another example of the network interface is a local area network (LAN) card to provide a data communication connection to a compatible LAN. Wireless links are another example. In any such implementation, network interface 1304 sends and receives electrical, electromagnetic, or optical signals that carry digital data streams representing various types of information.

Computer system 410 can send and receive information through the network interface 404 across a local network 420, an Intranet, or the Internet 430. In the Internet example, software components or services may reside on multiple different computer systems 410 or servers 431-435 across the network. The processes described above may be implemented on one or more servers, for example. A server 431 may transmit actions or messages from one component, through Internet 430, local network 420, and network interface 404 to a component on computer system 410. The software components and processes described above may be implemented on any computer system and send and/or receive information across a network, for example.

**Example**

Figures 7A-C are screen shots showing adaptation of a customization case of a prototype system according to an embodiment. In particular, Figure 7A shows a case adaptation view as employed in Phase I of the adaptation procedure. This screen shows an overview of the customization process 700 of the retrieved case (solution plan).

Figure 7B shows the system providing recommendations to the user, as may occur during Phases II and III of the adaptation procedure. As indicated above, the user has full control over the process, and is free to accept or decline the recommendation 702.

Figure 7C shows a screen shot of execution of the customization process during Phase IV of the adaptation procedure. This shows execution of the customization process in the target context, including status 704, system layer 706, assigned resource 708, and assigned editor 709 of individual customization tasks 710.

Description of Standard Enterprise System

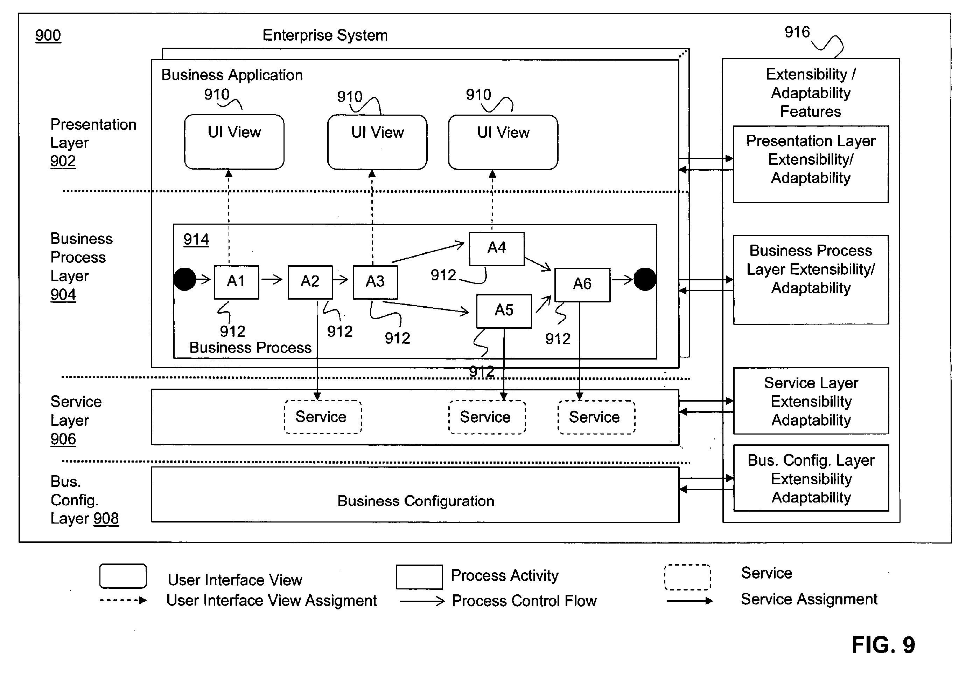

The case-based adaptation method may be used in extending standard enterprise systems. Standard enterprise systems may be described with a single overall abstracted model that spans across four abstraction layers, such as the presentation layer, business process layer, service layer, and business configuration layer. An enterprise system includes multiple business applications or reference processes that leverage a common service and business configuration layer. Fig. 9 shows a more detailed example of an enterprise system 900 according to one embodiment. Enterprise system 900 may be described with a single overall abstracted model that spans across a number (e.g., four) of abstraction layers, such as a presentation layer 902, a business process layer 904, a service layer 906, and a business configuration layer 908. Enterprise system 900 includes multiple (service-based) business applications that leverage a common service layer 906 and business configuration layer 908.

Presentation layer 902 comprises all artifacts and components for a service integrator interface (UI) part of the business application. In one embodiment, UI components (UI views 910) for a dedicated UI platform with all interrelations are located within presentation layer 902. The service integrator interface will be described in more detailed below.

Business process layer 904 contains models 912 of business processes 914 that are realized within the business application. Modeling elements for business processes may contain references to elements on other layers. For example, a human activity in a business process can refer to a UI component 910 with the implementation of the human service integrator interface. An automated activity can refer to a service declared in the service layer 906 with the implementation of the needed business functionality.

Service layer 906 contains services offered by enterprise system 900. Core services provide access to business objects. Composite services represent compositions of core services into larger bundles to provide advanced higher-value business functionality or application logic.

Business configuration layer 908 contains the configuration data for business applications with available parameters and configuration options (also known as `customizing') for business applications.

In order to adapt standard business applications to customer specific needs, enterprise systems 900 provide a large set of proprietary extensibility/adaptability features 916.

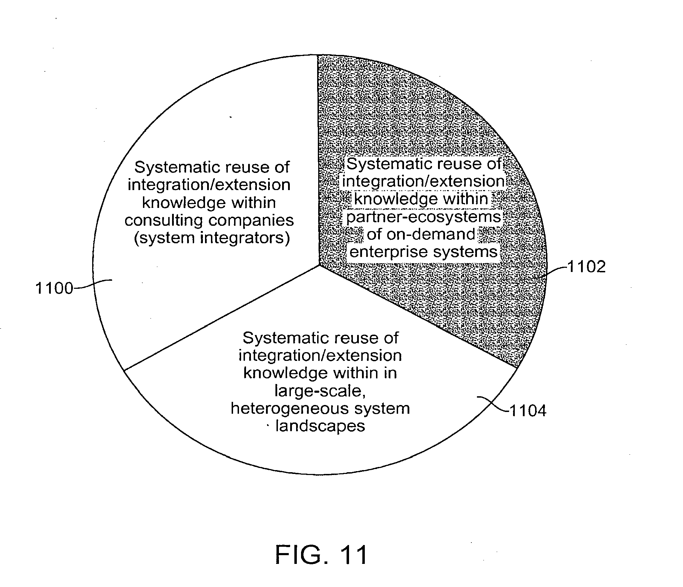

Figure 11 is a graphical depiction of possible areas of application for various embodiments. In a first application area 1100, integration/extension knowledge may be systematically reused within consulting companies (such as system integrators).

Currently, consulting companies expend significant effort in the training and education of new consultants to become domain experts. Consulting companies also expend significant effort to allow consultants to exchange knowledge and share their best practices and experiences gained in on-premise or on-demand integration projects. Moreover, while integration experience may be found in consulting teams, such knowledge is not typically systematically leveraged.

Embodiments as described herein may thus allow response to marketplace pressures to deliver integration solutions in a shorter time with fewer costs to customers. Embodiments could also facilitate off-shore development approaches in the area of system integration in large-scale customer landscapes.

According to a second application Area 1102 of Figure 11, integration/extension knowledge may be systematically reused within partner-ecosystems of on-demand enterprise systems. Specifically, on-demand standard enterprise software is finding increasing use. In contrast to on-premise solutions, such on-demand subscribers typically require less on-site consulting.

Subscribers of on-demand standard enterprise software request easier and faster integration of complementary services. This has led to the emergence of eco-systems in which service marketplaces and application stores provide complementary solutions (e.g. add-ons) to standard enterprise systems developed by ISVs / partners. Moreover, providers of on-demand standard enterprise software have begun to offer partner development environments (PaaS) facilitating the more rapid development of extensions / complementary solutions and third-party service integrations.

Thus according to various embodiments, multiple tenants and partners ( = domain experts) may share a common infrastructure providing a valuable resource to systematically share integration/extension knowledge. In certain cases, such knowledge exchange might be possible between different tenants.

According to a third potential application area 1104 of Figure 11, embodiments may allow systematic reuse of integration/extension knowledge within large-scale, heterogeneous system landscapes. Specifically, large organizations may be able to employ embodiments to reuse existing solutions, or to adapt existing solutions for reuse within the specialized knowledge spheres present within the context of a larger system environment.

Particular embodiments may be implemented in a non-transitory computer-readable storage medium for use by or in connection with the instruction execution system, apparatus, system, or machine. The computer-readable storage medium contains instructions for controlling a computer system to perform a method described by particular embodiments. The instructions, when executed by one or more computer processors, may be operable to perform that which is described in particular embodiments.

As used in the description herein and throughout the claims that follow, "a", "an", and "the" includes plural references unless the context clearly dictates otherwise. Also, as used in the description herein and throughout the claims that follow, the meaning of "in" includes "in" and "on" unless the context clearly dictates otherwise.

The above description illustrates various embodiments of the present invention along with examples of how aspects of the present invention may be implemented. The above examples and embodiments should not be deemed to be the only embodiments, and are presented to illustrate the flexibility and advantages of the present invention as defined by the following claims. Based on the above disclosure and the following claims, other arrangements, embodiments, implementations and equivalents may be employed without departing from the scope of the invention as defined by the claims.

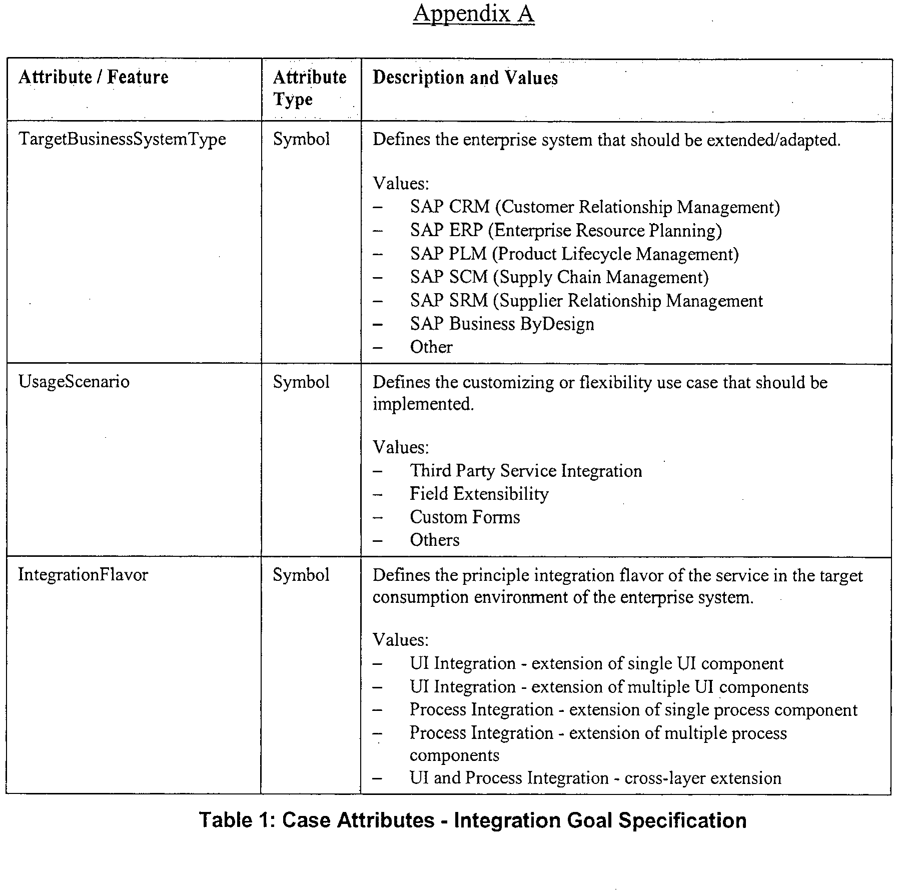

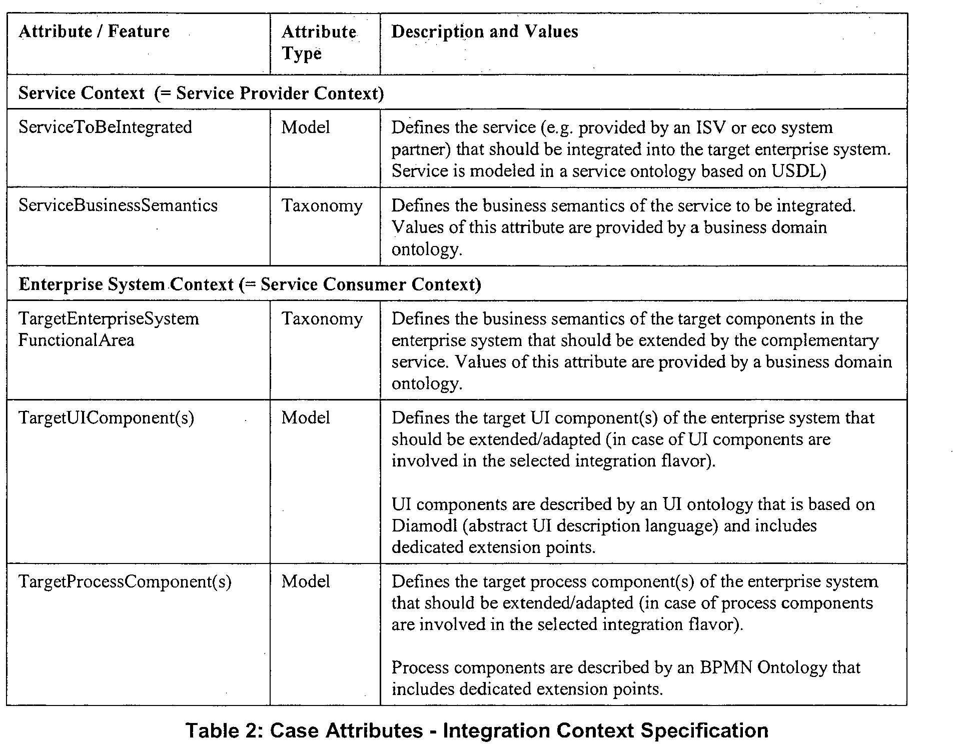

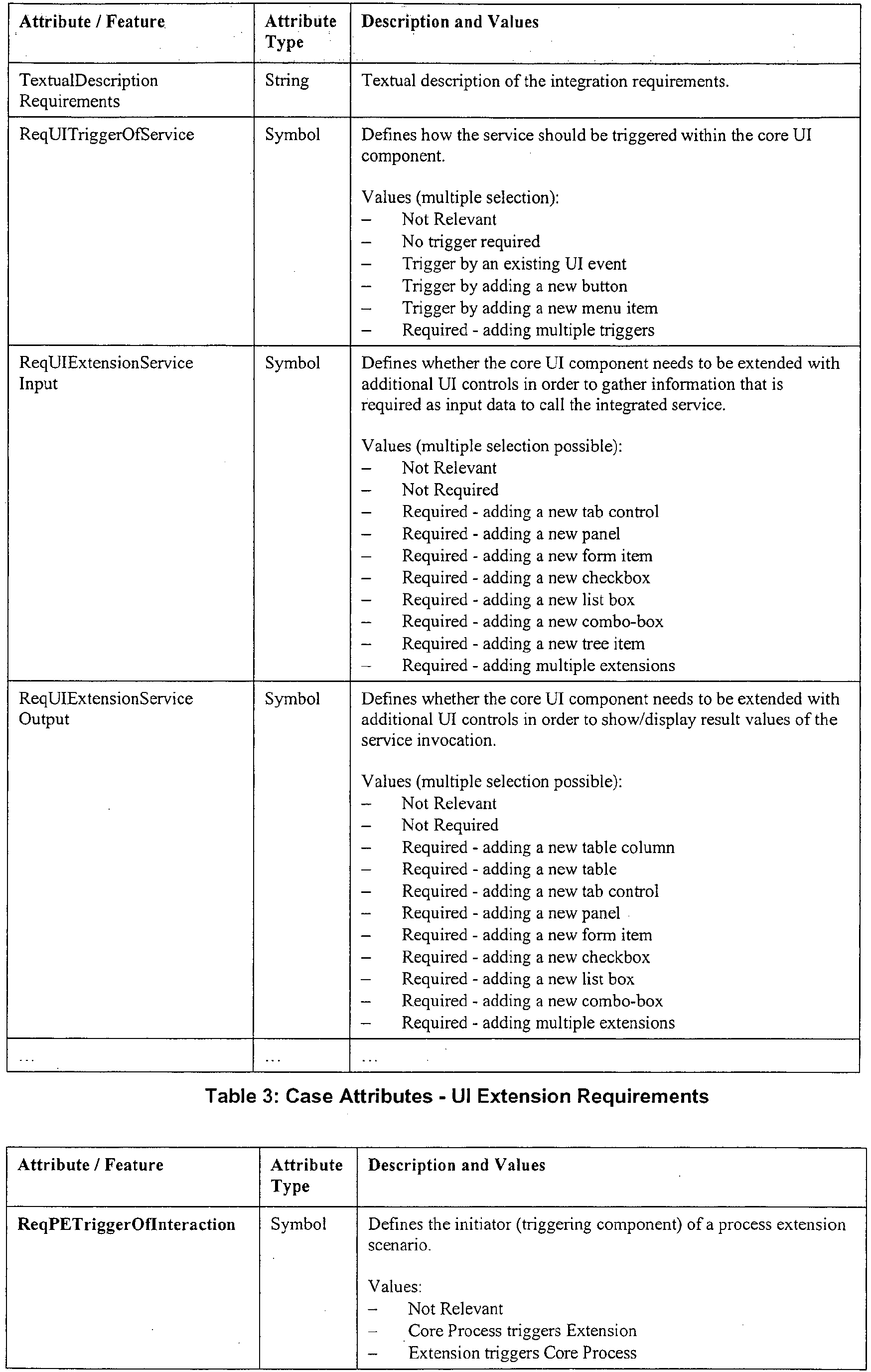

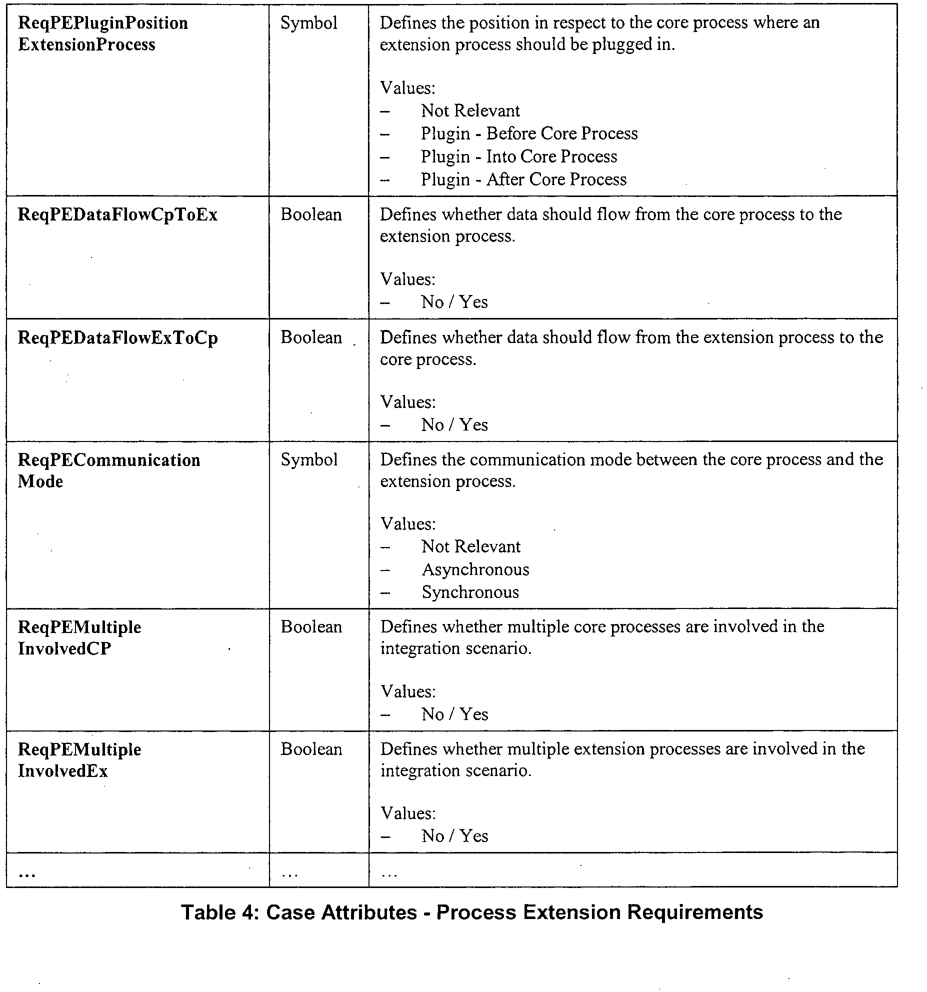

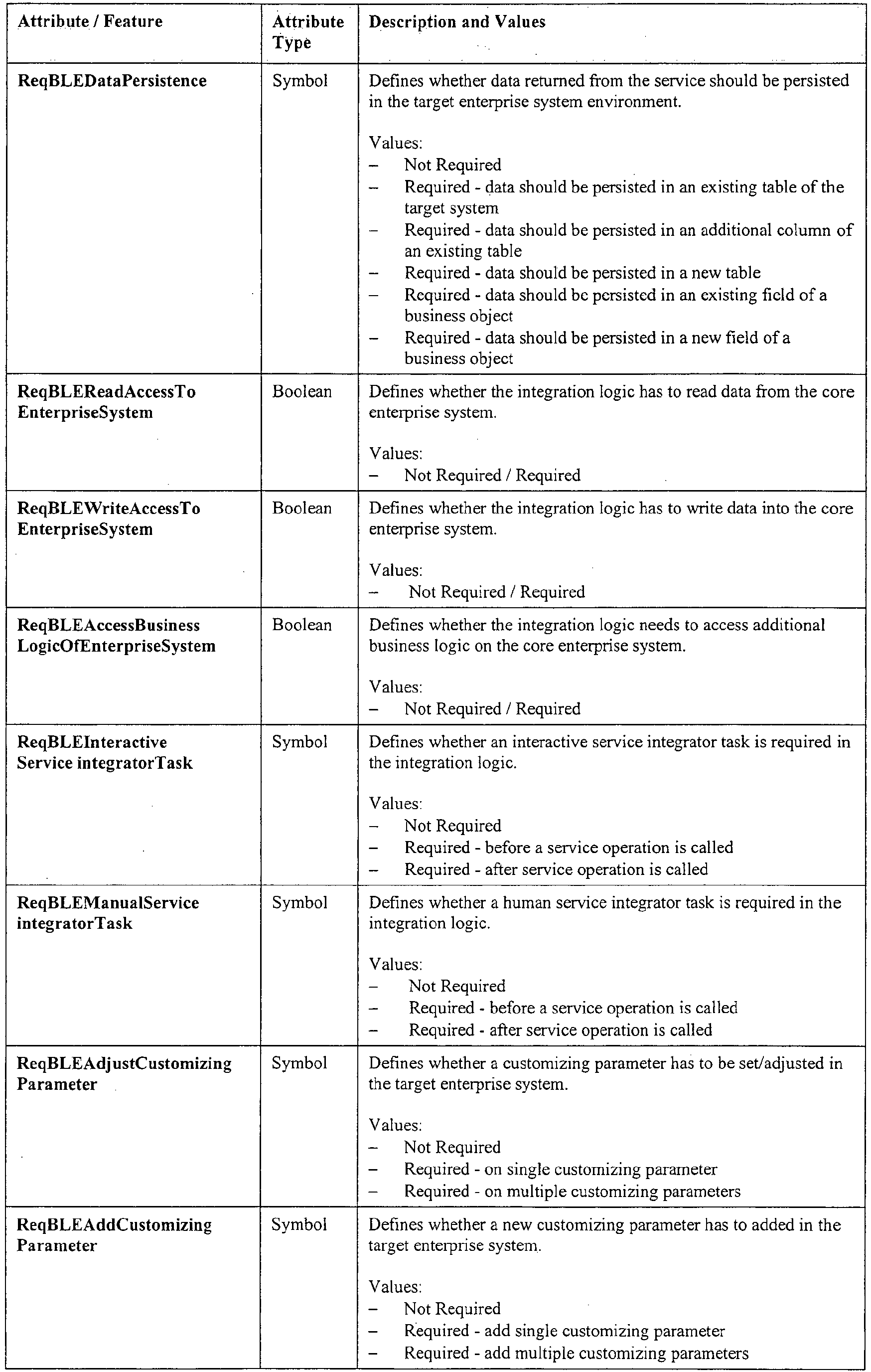

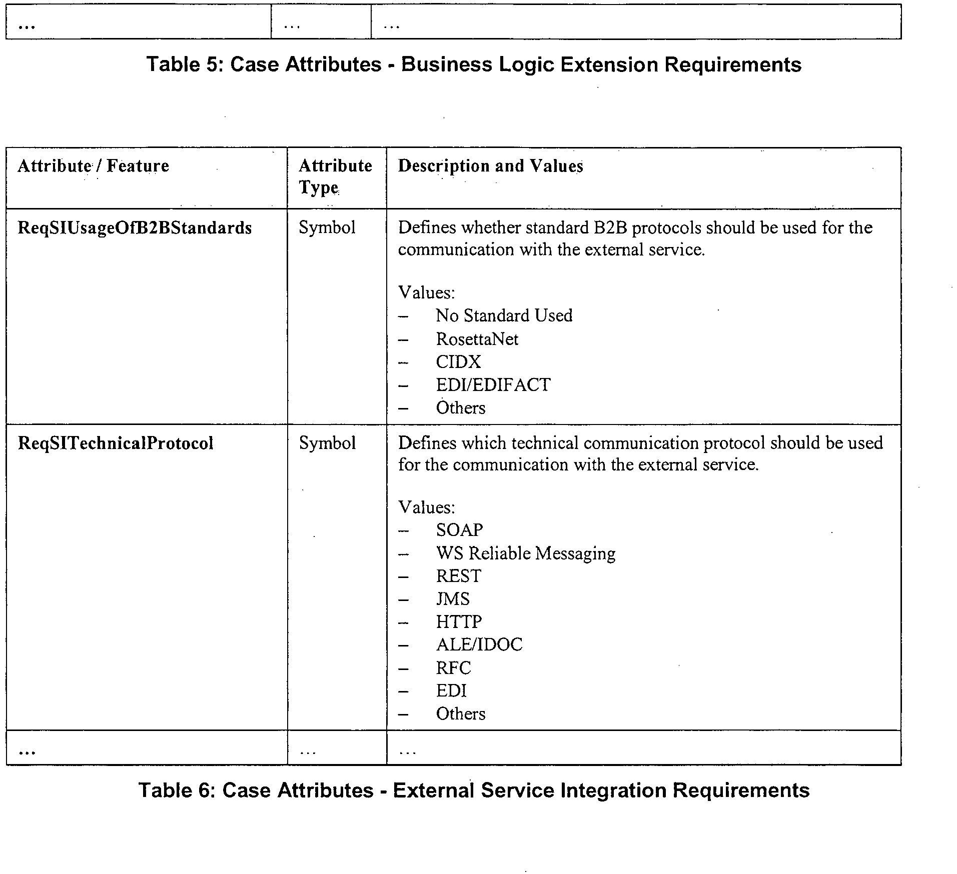

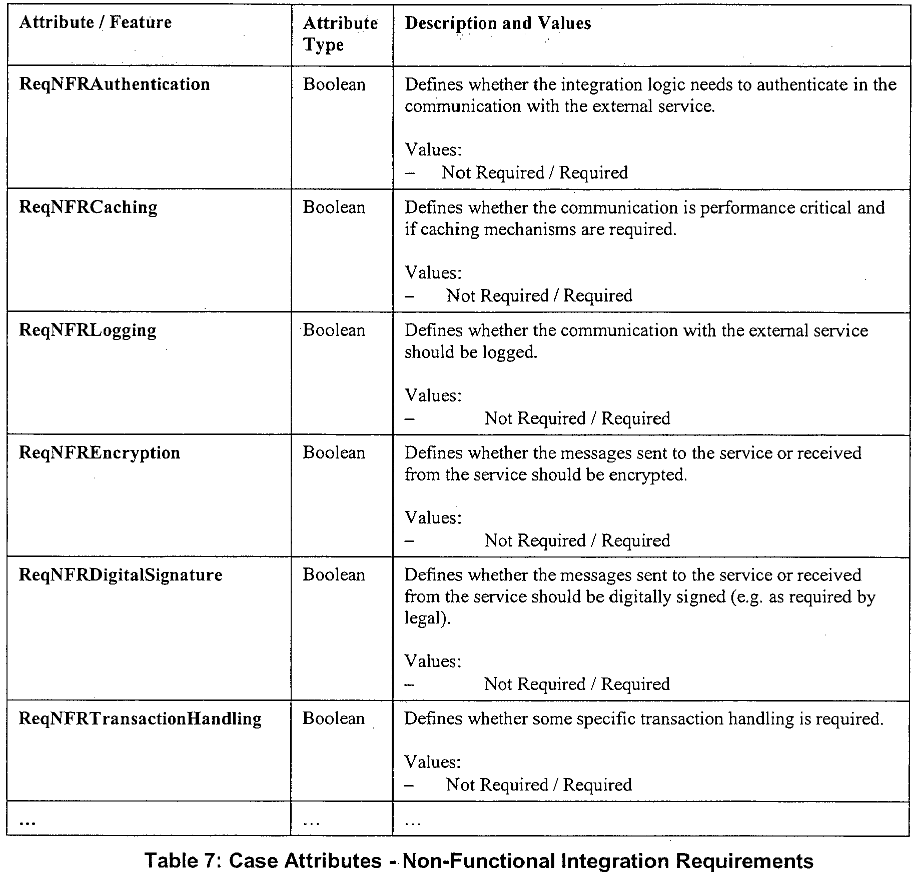

## Claims

1. A method comprising:
providing a stored customization case previously used to customize a first enterprise system, wherein the stored customization case includes a customization problem and a customization solution;
providing a knowledge base including an adaptation rule;
causing an adaptation engine to receive from a user a query comprising an unsolved customization case to customize a second enterprise system, the unsolved customization case having a new customization problem and not having a customization solution;
causing the adaptation engine to reference the stored customization case and the adaptation rule to generate a target customization case comprising the new customization problem and an adapted customization solution; and
causing the adaptation engine to output the target customization case to the user.

2. The method of claim 1 wherein generating the target customization case comprises:
determining a list of recommended plan adaptation steps of a customization process;
selecting and adjusting the recommended plan adaptation steps;
applying one or more of the recommended plan adaptation steps; and
executing the customization process in a context of the target customization case.

3. The method of claim 2 wherein determining a list of recommended plan adaptation steps of a customization process is based on differences between customization problem descriptions of the query, and customization problem descriptions of the stored customization case.

4. The method of claim 2 wherein selecting and adjusting the recommended plan adaptation steps comprises prompting the user to manually accept, reject, or complete parameterization of suggested modifications of the customization process,
wherein the list of recommended plan adaptation steps may comprise a recommendation to modify, insert, or delete a customization task of the customization process.

5. The method of any one of the preceding claims wherein the knowledge base comprises an adaptation pattern referenced by the adaptation engine to generate the target customization case.

6. A non-transitory computer readable storage medium embodying a computer program for performing a method, said method comprising:
providing a stored customization case previously used to customize a first enterprise system, wherein the stored customization case includes a customization problem and a customization solution;
providing a knowledge base including an adaptation rule;
causing an adaptation engine to receive from a user a query comprising an unsolved customization case to customize a second enterprise system, the unsolved customization case having a new customization problem and not having a customization solution;
causing the adaptation engine to reference the stored customization case and the adaptation rule to generate a target customization case comprising the new customization problem and an adapted customization solution; and
causing the adaptation engine to output the target customization case to the user.

7. The non-transitory computer readable storage medium of claim 6 wherein generating the target customization case comprises:
determining a list of recommended plan adaptation steps of a customization process;
selecting and adjusting the recommended plan adaptation steps;
applying one or more of the recommended plan adaptation steps; and
executing the customization process in a context of the target customization case.

8. The non-transitory computer readable storage medium of claim 7 wherein determining a list of recommended plan adaptation steps of a customization process is based on differences between customization problem descriptions of the query, and customization problem descriptions of the stored customization case.

9. The non-transitory computer readable storage medium of claim 7 wherein selecting and adjusting the recommended plan adaptation steps comprises prompting the user to manually accept, reject, or complete parameterization of suggested modifications of the customization process,
wherein the list of recommended plan adaptation steps may comprise a recommendation to modify, insert, or delete a customization task of the customization process.

10. The non-transitory computer readable storage medium of any one of claims 6 to 9 wherein the knowledge base comprises an adaptation pattern referenced by the adaptation engine to generate the target customization case.

11. A computer system comprising:
one or more computer processors; and
a non-transitory computer readable storage medium comprising instructions for controlling the one or more computer processors to be operable to:
provide a stored customization case previously used to customize a first enterprise system, wherein the stored customization case includes a customization problem and a customization solution;
provide a knowledge base including an adaptation rule;
cause an adaptation engine to receive from a user a query comprising an unsolved customization case to customize a second enterprise system, the unsolved customization case having a new customization problem and not having a customization solution;
cause the adaptation engine to reference the stored customization case and the adaptation rule to generate a target customization case comprising the new customization problem and an adapted customization solution; and
cause the adaptation engine to output the target customization case to the user.

12. The computer system of claim 11 wherein generating the target customization case comprises:
determining a list of recommended plan adaptation steps of a customization process;
selecting and adjusting the recommended plan adaptation steps;
applying one or more of the recommended plan adaptation steps; and
executing the customization process in a context of the target customization case.

13. The computer system of claim 12 wherein determining a list of recommended plan adaptation steps of a customization process is based on differences between customization problem descriptions of the query, and customization problem descriptions of the stored customization case.

14. The computer system of claim 12 wherein selecting and adjusting the recommended plan adaptation steps comprises prompting the user to manually accept, reject, or complete parameterization of suggested modifications of the customization process,
wherein the list of recommended plan adaptation steps may comprise a recommendation to modify, insert, or delete a customization task of the customization process.

15. The computer system of any one of claims 11 to 14 wherein the knowledge base comprises an adaptation pattern referenced by the adaptation engine to generate the target customization case.
